# FASCICULE DE BREVET EUROPEEN

(11) **EP 3 326 113 B1**
(45) Date de publication et mention de la délivrance du brevet: **25.03.2020**
(21) Numéro de dépôt: 16757298.1
(22) Date de dépôt: 21.07.2016
(51) Int. Cl.: G06K 19/077

(54) **DISPOSITIF DE RADIO-IDENTIFICATION POUR UN ÉLÉMENT À IDENTIFIER DE FORME TUBULAIRE EN ENVIRONNEMENT CONTRAIGNANT**
RADIO IDENTIFICATION GERÄTE ZUR IDENTIFIZIERUNG EIN ROHRFÖRMIG ELEMENT IN ZWINGEND UMWELT
RADIO IDENTIFICATION DEVICE FOR IDENTIFYING AN ELEMENT OF A TUBULAR SHAPE IN A CONTRAIGNING ENVIRONMENT

(30) Priorité: 21.07.2015 FR 1556877
(43) Date de publication de la demande: 30.05.2018
(73) Titulaire: Systemes Et Technologies Identification, 13850 Greasque (FR)
(72) Inventeur: DUPART, Vincent, 83470 Saint-maximin-la-Sainte-Beaume (FR); MARGALEF, Aurélie, 13790 Rousset (FR); POITRAT, Sylvain, 13850 Greasque (FR)
(74) Mandataire: Chevalier, Renaud Philippe
(86) Numéro de dépôt international: PCT/FR2016/051896
(87) Numéro de publication internationale: WO 2017/013370

(56) Documents cités:
- EP-A1- 2 765 537
- DE-A1-102005 058 385
- US-A1- 2010 123 586

## Description

La présente invention se rapporte à un dispositif de radio-identification pour un élément à identifier de forme tubulaire.

Elle se rapporte plus particulièrement à un dispositif de radio-identification pour identifier une conduite de circulation de fluide (eau, gaz, pétrole, ...), un câble électrique, une gaîne tressée ou une gaîne métallique.

Dans les secteurs de l'automobile, de l'énergie et notamment du nucléaire, des télécommunications, de l'avionique, des machines industrielles, des appareils électroniques, des réseaux de communication, et de manière générale dans le milieu industriel, il est souvent complexe d'assurer l'identification indivuduelle des câbles, conduites et autres éléments tubulaires, à des fins d'entretien, de réparation, de maintenance, de traçabilité, de logistique, de distribution, de gestion de configuration ou de sécurité anti-fraude.

A cet effet, il est connu, notamment du document EP 2 765 537 A1, d'employer des dispositifs de radio-identification montés sur de tels éléments tubulaires, afin d'établir une radio-identification selon la technologie RFID.

Ce document EP 2 765 537 A1 propose un dispositif de radio-identification comprenant une puce de radio-identification raccordée à une antenne dipolaire à brins, avec une enveloppe en matériau à mémoire de forme, notamment du type polytétrafluoroéthylène. Le dispositif de radio-identification est fixé sur l'élément tubulaire en exploitant les caractéristiques de mémoire de forme de l'enveloppe, et plus précisément en agençant l'enveloppe en forme de ruban torsadé et en assurant la fixation par enserrement par rétractation consécutivement à un étirement.

Cependant, il s'avère qu'une telle fixation par enserrement consécutivement à un étirement, en usant des propriétés de mémoire de forme de l'enveloppe, n'offre pas une tenue mécanique suffisante en toutes conditions.

En effet, dans des environnements dits contraignants soumis à des vibrations, et éventuellement à de larges variations de températures et/ou des atmosphères chimiquement toxiques ou corrosives et/ou des conditions de pression sévères, il est indispensable de garantir une fixation durable et stable du dispositif de radio-identification sur l'élément à identifier, tout en offrant une protection efficace de la puce de radio-identification.

Il est également connu du document US 2006/0186210 un dispositif de radio-identification pour élément tubulaire, où le dispositif comprend un manchon souple protégeant un transpondeur RFID en relation avec une antenne qui forme au moins un tour périphérique pour pouvoir procéder à une lecture quelque soit l'orientation. Cependant, un tel dispositif s'avère peu pratique d'emploi, car il nécessite d'enfiler le manchon autour de l'élément tubulaire, ce qui est complètement rédhibitoire pour des réseaux de câbles ou de conduites, en particulier dans des espaces encombrés et difficiles d'accès. De plus, un tel dispositif est propre à présenter des problèmes d'étanchéité et également des défauts de maintien stable autour de l'élément tubulaire. En effet, le manchon est maintenu uniquement par serrage élastique et par frottement, ce qui est inenvisageable dans des environnements contraignants soumis à de fortes vibrations et à de fortes variations de température.

La présente invention a pour but de répondre à cette problématique de tenue d'un dispositif de radio-identification sur un élément tubulaire, tout en procurant une lecture par radio-identification dans toutes les directions (pour s'affranchir de la position finale du dispositif de radio-identification sur l'élément tubulaire), à des distances de détection raisonnables, notamment de l'ordre de 1 à 2 mètres minimum ; la distance de détection correspondant à la distance minimale nécessaire pour la détection du dispositif de radio-identification par un lecteur approprié, et éventuellement pour l'écriture sur la puce de radio-identification.

A cet effet, elle propose un dispositif de radio-identification pour un élément à identifier de forme tubulaire en environnement contraignant, ledit dispositif de radio-identification comprenant une puce de radio-identification reliée à au moins une antenne à deux brins conducteurs raccordés à la puce de radio-identification, et une enveloppe flexible enveloppant intégralement ladite puce de radio-identification et lesdits brins, ladite enveloppe présentant une portion centrale surmoulant la puce de radio-identification et présentant deux bandes, s'étendant de part et d'autre de ladite portion centrale, qui surmoulent chacune au moins un dit brin.

Ce dispositif de radio-identification est remarquable en ce que :
- l'enveloppe est réalisée par un surmoulage en matière silicone de la puce de radio-identification et des brins,
- les deux bandes de l'enveloppe sont thermo-formées selon une configuration torsadée autour d'un axe de torsion commun pour permettre un maintien temporaire dudit dispositif autour dudit élément, et
- les deux bandes présentent chacune une extrémité libre pourvue d'un bossage percé propre à coopérer avec un collier de serrage pour permettre une fixation définitive dudit dispositif autour dudit élément,
- les brins sont chacun gainés par une gaine en matériau diélectrique, à l'intérieur de l'enveloppe qui surmoule lesdites gaines.

Ainsi, l'enveloppe est réalisée en silicone, un matériau offrant d'excellentes propriétés en matière de protection thermique et d'isolation aux vibrations, et garantissant un thermoformage de l'enveloppe dans une forme torsadée (ou en hélice) qui est stable et qui permettra de positionner temporairement le dispositif de radio-identification sur l'élément tubulaire, avant de réaliser un ancrage durable au moyen d'au moins deux colliers de serrage passant dans les orifices ou trous des bossages percés. Les serrages au niveau des extrémités libres des bandes garantissent une tenue sur toute la longueur de l'enveloppe. En outre, les gaines garantissent une protection et une stabilisation des brins lors de l'opération de surmoulage de l'enveloppe.

Avantageusement, la portion centrale présente également un bossage percé propre à coopérer avec un collier de serrage.

Le serrage au niveau de la portion centrale garantit une extrême stabilité de la puce de radio- identification.

Dans une première réalisation, avant thermo-formage, les deux bandes de l'enveloppe s'étendent, à partir de la portion centrale jusqu'à leurs extrémités libres respectives, selon deux axes principaux, où ces deux axes principaux s'intersectent selon un angle compris entre 60 et 120 degrés, de sorte que l'enveloppe présente une forme générale en « V ».

La Demanderesse a noté qu'une telle forme en « V » apporte des performances optimales en matière de distance de détection et d'angles de détection autour de l'élément tubulaire.

Avantageusement, les deux axes principaux s'intersectent selon un angle compris entre 75 et 105 degrés, et notamment entre 85 et 95 degrés, pour une perfomance accrue de la lecture.

Dans une seconde réalisation, avant thermo-formage, les deux bandes de l'enveloppe s'étendent, à partir de la portion centrale jusqu'à leurs extrémités libres respectives, selon un même axe principal commun, de sorte que l'enveloppe présente une forme générale rectiligne.

Bien que moins performante que la première réalisation en « V », cette seconde réalisation offre tout de même des performances intéressantes en matière de distance de détection, pour la détection et éventuellement pour l'écriture sur la puce de radio-identification.

Selon une caractéristique, avant thermo-formage, chaque bande de l'enveloppe s'étend, à partir de la portion centrale jusqu'à son extrémité libre, selon un axe principal, et le bossage correspondant présente un trou s'étendant selon un axe de passage incliné par rapport audit axe principal d'un angle compris entre 30 et 60 degrés.

Cette inclinaison des trous de passage des colliers de serrage est avantageuse pour guider les colliers de serrage sur la circonférence de l'élément à identifier, en prenant en compte la forme torsadée des bandes de l'enveloppe.

Selon une autre caractéristique, l'enveloppe présente une face interne prévue pour venir en appui contre l'élément à identifier, et une face externe opposée, où les bossages font saillie de ladite face externe et/ou de ladite face interne.

Il est à noter que la face interne peut être plane, lisse ou bien présenter, sur tout ou partie de sa superficie, des éléments rugueux favorisant l'accrochage sur l'élément à identifier. Ces éléments rugueux peuvent notamment être prévus uniquement au niveau des bossages.

De manière préférentielle, le dispositif comprend deux antennes à deux brins, chaque bande de l'enveloppe surmoulant deux brins adjacents écartés l'un de l'autre.

Avec deux antennes à deux brins, deux configurations sont envisageables, à savoir :
- une configuration (a) avec une première antenne ayant ses deux brins dans une première bande, et une seconde antenne ayant ses deux brins dans une seconde bande,
- une configuration (b) avec une première antenne ayant un premier brin dans une première bande et un second brin dans une seconde bande, et une seconde antenne ayant un premier brin dans une première bande et un second brin dans une seconde bande.

Dans la configuration (b), deux modes sont possibles, à savoir :
- un premier mode où le premier brin de la première antenne est dans le prolongement (ou l'alignement) avec le second brin de la première antenne, et où le premier brin de la seconde antenne est dans le prolongement (ou l'alignement) avec le second brin de la seconde antenne ; et
- un second mode où le premier brin de la première antenne est dans le prolongement (ou l'alignement) avec le premier brin de la seconde antenne, et où le second brin de la première antenne est dans le prolongement (ou l'alignement) avec le second brin de la seconde antenne.

En variante, le dispositif comprend une unique antenne à deux brins, avec un premier brin dans une première bande et un second brin dans une seconde bande.

Conformément à une caractéristique avantageuse de l'invention, à l'intérieur de chaque bande, les deux gaines surmoulant les deux brins concernés sont longitudinalement reliées l'une à l'autre par un ruban qui maintien un écartement constant entre les deux brins.

Un tel ruban est particulièrement adapté pour répondre aux exigences des environnements contraignants, et garantir un fonctionnement optimal malgré les fortes pressions, les variations de température et les vibrations.

De préférence, à l'intérieur de chaque bande, le ruban est réalisé par surmoulage des gaines.

Selon une possibilité de l'invention, la puce de radio-identification est soudée sur une carte électronique sur laquelle sont soudés les brins.

La présente invention concerne également un procédé de fabrication d'un dispositif de radio-identification conforme à l'invention, comprenant les étapes suivantes :
- raccordement des brins à la puce de radio-identification ;
- réalisation d'une enveloppe en matière silicone par surmoulage de ladite puce de radio-identification et des brins où les brins sont chacun gainés par une gaine en matériau diélectrique, à l'intérieur de l'enveloppe qui surmoule lesdites gaines, de sorte que l'enveloppe présente une portion centrale surmoulant la puce de radio-identification et deux bandes, s'étendant de part et d'autre de ladite portion centrale, qui surmoulent chacune au moins un dit brin où les deux bandes présentent chacune une extrémité libre pourvue d'un bossage percé propre à coopérer avec un collier de serrage ; et
- thermoformage de l'enveloppe de sorte que les deux bandes de l'enveloppe soient thermo-formées selon une configuration torsadée autour d'un axe de torsion commun.

L'invention se rapporte aussi à une utilisation d'un dispositif de radio-identification conforme à l'invention, pour identifier un élément à identifier de forme tubulaire, notamment du type câble électrique, conduite de circulation de fluide, gaîne tressée ou gaîne métallique, en positionnant les bandes torsadées de l'enveloppe autour de l'élément à identifier, et en serrant ladite enveloppe au moyen d'au moins deux colliers de serrage traversant les bossages percés de l'enveloppe et enserrant ledit élément à identifier.

D'autres caractéristiques et avantages de la présente invention apparaîtront à la lecture de la description détaillée ci-après, d'exemples de mise en œuvre non limitatifs, faite en référence aux figures annexées dans lesquelles :
- les figures 1 et 2 sont des vues schématiques en perspective, selon deux angles de vue distincts, d'un premier dispositif de radio-identification conforme à l'invention, avant thermoformage ;
- la figure 3 est une vue schématique de profil du premier dispositif de radio-identification des figures 1 et 2 ;
- la figure 4 est une vue schématique de dessus du premier dispositif de radio-identification des figures 1 et 2, sur laquelle les éléments internes de ce premier dispositif sont illustrés en traits interrompus ;
- la figure 5 est une vue schématique du premier dispositif de radio-identification, selon le plan de coupe V-V de la figure 4 ;
- la figure 6 est une vue schématique en perspective de deux brins d'antenne gainés dans des gaines assemblées à un ruban, servant à réaliser une antenne pour un dispositif de radio-identification conforme à l'invention, et notamment pour le premier dispositif des figures 1 à 5 et pour le second dispositif des figures 7 à 10 ;
- la figure 7 est une vue schématique en perspective d'un second dispositif de radio-identification conforme à l'invention, avant thermoformage ;
- la figure 8 est une vue schématique de profil du second dispositif de radio-identification de la figure 7, avec deux parties zoomées pour plus de clarté ;
- la figure 9 est une vue schématique de dessus du second dispositif de radio-identification de la figure 7 ;
- la figure 10 est une vue schématique du second dispositif de radio-identification, selon le plan de coupe X-X de la figure 9 ;
- la figure 11 est une vue schématique en perspective du premier dispositif de radio-identification, après l'opération de thermoformage et en place sur un élément à identifier;
- la figure 12 est une vue schématique en perspective du second dispositif de radio-identification, après l'opération de thermoformage
- la figure 13 est une vue schématique en perspective du second dispositif de radio-identification, après l'opération de thermoformage et en place sur un élément à identifier; et
- la figure 14 représente des courbes de variation de la distance maximale de détection en fonction de la fréquence du signal de radio-identification, pour un premier et un second dispositif de radio-identification.

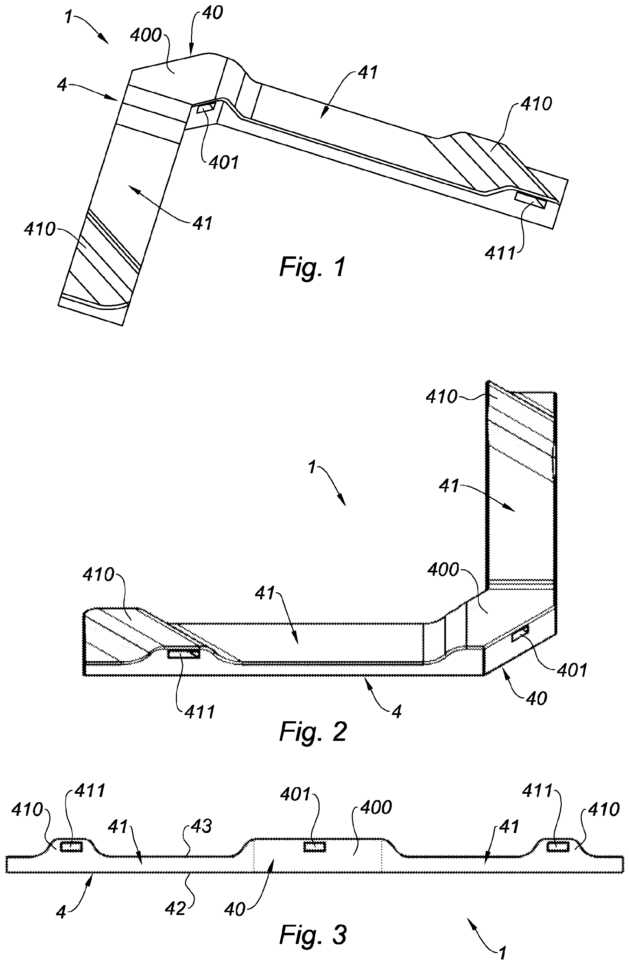

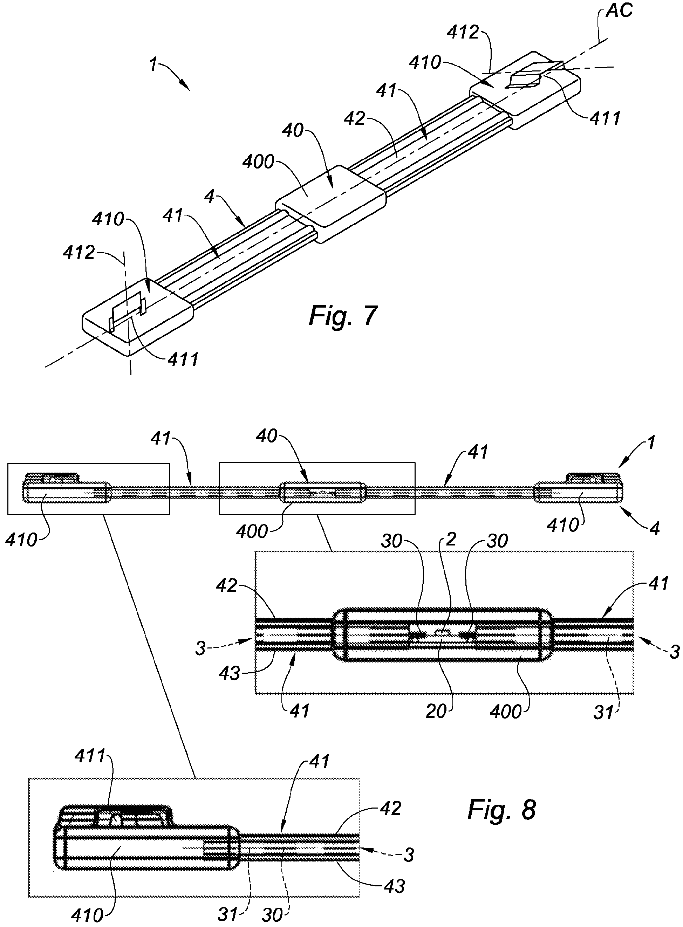

De manière générale, un dispositif 1 de radio-identification conforme à l'invention est prévue pour être fixé sur un élément EL à identifier de forme tubulaire, afin de permettre la radio-identification d'un tel élément EL avec un lecteur de radio-identification adéquat. La description qui suit porte sur deux modes de réalisation, non limitatifs, dont un premier mode de réalisation décrit en référence aux figures 1 à 5 et 11, et un second mode de réalisation décrit en référence aux figures 7 à 10, 12 et 13.

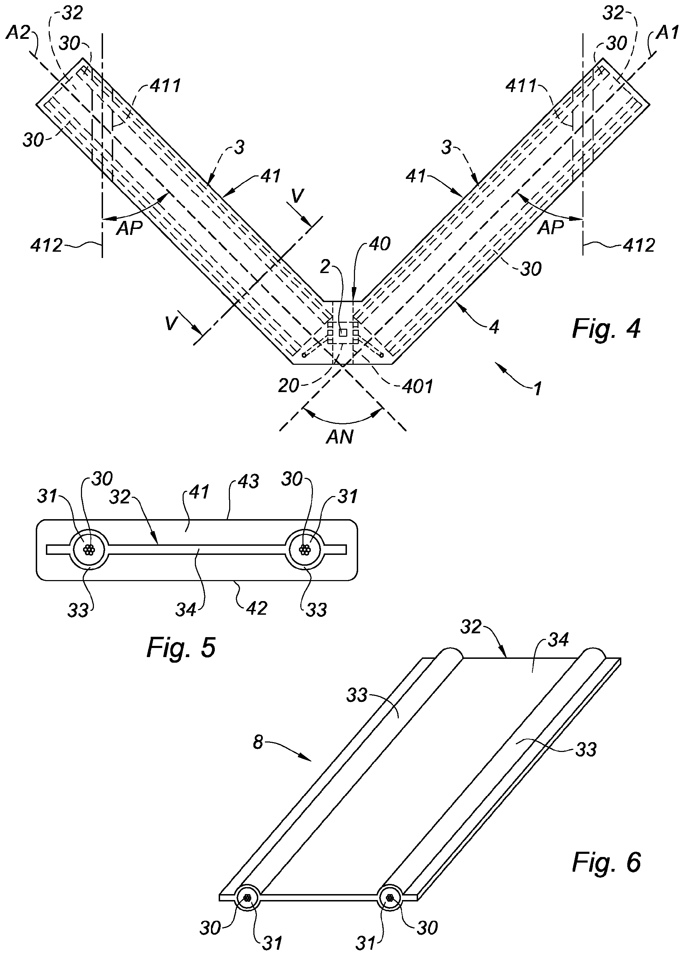

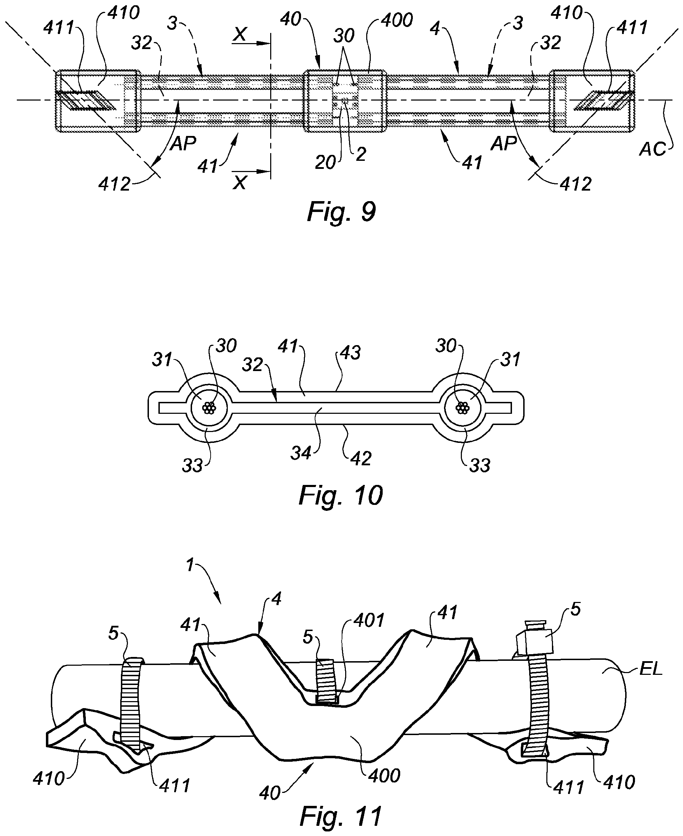

Ce dispositif 1 comprend une puce 2 de radio-identification (visible sur la figure 4 pour le premier mode de réalisation et sur les figures 8 et 9 pour le second mode de réalisation) soudée sur une carte électronique 20, ainsi que deux antennes 3 comprenant chacune deux brins 30 conducteurs raccordés à la puce 2 en étant soudés sur la carte électronique 20.

Les brins 30 s'étendent de part et d'autre de la puce 2, respectivement à droite et à gauche, avec deux brins à droite et deux brins à gauche. Les deux brins de droite peuvent être associés à une première antenne, et les deux brins de gauche peuvent être associés à une seconde antenne. En variante, un brin de droite et un brin de gauche sont associés à une première antenne, et l'autre brin de droite et l'autre brin de gauche sont être associés à une seconde antenne. Il aurait également été envisageable de prévoir une seule antenne ayant un brin à droite et un brin à gauche.

Comme visible sur les figures 4 et 5 pour le premier mode de réalisation et sur les figures 8 à 10 pour le second mode de réalisation, et également sur la figure 6 associée aux deux modes de réalisation, chaque paire de brins 30 (à droite comme à gauche) est fournie sous la forme d'une bande dite primaire 8 (visible seule sur la figure 6) comprenant :
- les deux brins 30 qui sont chacun gainé par une gaine 31 en matériau diélectrique, comme par exemple en polymère PTFE (Polytétrafluoroéthylène), chaque brin 30 pouvant être composé d'un fil métallique ou d'un ensemble de plusieurs fils métalliques ; et
- un ruban 32 qui surmoule les deux gaines 31 et qui présente deux portions d'extrémité 33 qui surmoulent les gaines 31 respectives, et une portion centrale 34 qui forme un bande mince qui maintient les deux gaines 31 parallèles entre elles, de sorte que les deux gaines 31 (et donc les deux brins 30) sont maintenus à distance avec un écartement constant, ledit ruban 32 étant réalisé dans un matériau thermoplastique diélectrique.

Le matériau thermoplastique diélectrique du ruban 32 est par exemple un matériau polymère FEP (Perfluoro Ethylène Propylène).

Ainsi, l'ensemble paire de brins 30/gaines 31/ruban 32 est fourni sous la forme de cette bande primaire 8 qui sera découpée à la longueur voulue ; une telle bande primaire 8 pouvant être employée tant pour le premier dispositif des figures 1 à 5 que pour le second dispositif des figures 7 à 10.

A une extrémité de cette bande primaire 8, le ruban 32 et les gaines 31 sont dénudées afin de mettre à nue les brins 30 pour permettre une connexion par soudure avec la carte électronique 20, notamment en soudant directement chaque brin 30 sur la carte électronique 20.

Le dispositif 1 comprend en outre une enveloppe 4 en silicone qui enveloppe intégralement la puce 2, la carte électronique 20 et les deux bandes primaires 8, et donc les deux paires de brins 30.

Cette enveloppe 4 est réalisée par surmoulage et présente :
- une portion centrale 40 qui surmoule la puce 2 et la carte électronique 20 ; et
- deux bandes 41 qui surmoulent les deux bandes primaires 8, et par conséquent les paires de brins 30 des antennes 3, ces deux bandes 41 s'étendant de part et d'autre de la portion centrale 40, respectivement à droite et à gauche.

La portion centrale 40 présente un bossage 400 qui forme une surépaisseur comparativement aux épaisseurs des deux bandes 41.

Dans le premier mode de réalisation, ce bossage 400 est percé d'un trou 401 propre à coopérer avec un collier de serrage 5, tandis que dans le second mode de réalisation, ce bossage 400 n'est pas percé.

Dans les deux modes de réalisation, les deux bandes 41 présentent chacune une extrémité libre également pourvue d'un bossage 410 percé d'un trou 411 propre à coopérer avec un collier de serrage 5. Ces bossages 400 forment des surépaisseurs, comparativement aux épaisseurs des bandes 41 prises entre la portion centrale 40 et les bossages 410.

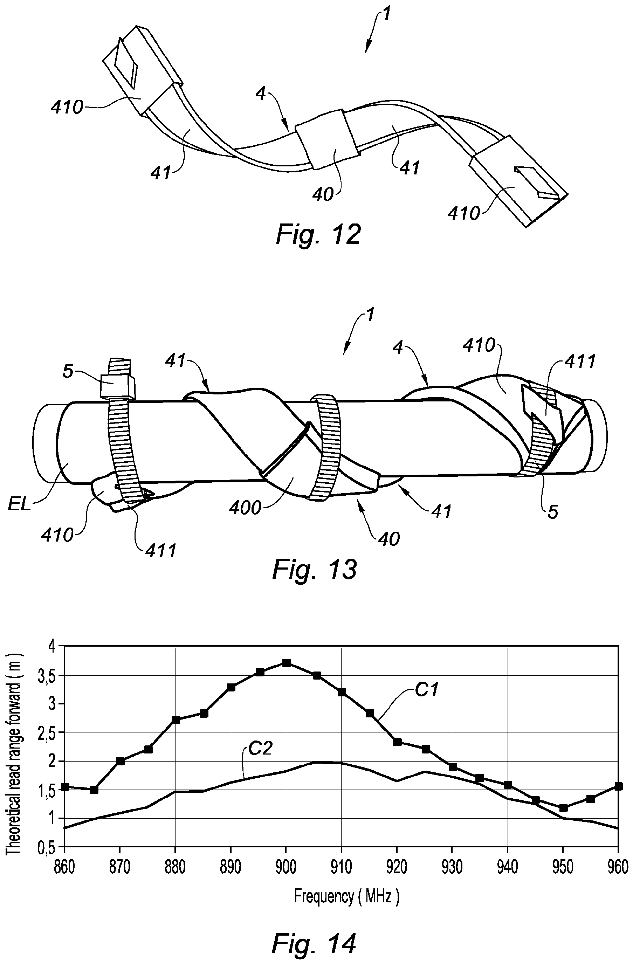

Ainsi, et comme visible sur les figures 11 et 13, l'enveloppe 4 présente deux ou trois trous 401, 411 prévus pour le passage de colliers de serrage 5 respectifs, notamment du type collier RILSAN™ ou collier TY-RAP™.

Il est à noter que les trous 401, 411 peuvent par exemple être délimités par des arches saillantes sur le dessus des bossages, ou bien être réalisés directement dans la matière des bossages.

Les bandes 41 présente une face interne 42 prévue pour venir en appui contre l'élément EL, cette face interne 42 pouvant être substantiellement plane et lisse ou bien optionnellement présenter, sur tout ou partie de sa superficie, des éléments rugeux (notamment du type grains, dents ou pointes) qui renforceront l'accrochage de l'enveloppe 4 sur l'élément EL. L'enveloppe 4 présente également une face externe 43 opposée.

Dans le premier mode de réalisation, et comme visible sur la figure 3, les trois bossages 400, 410 font saillie des faces externes 43 des bandes 41, sans dépasser des faces internes 42, de sorte que l'enveloppe 4 présente une face interne 42 continue (lisse ou avec des éléments rugueux).

Dans le second mode de réalisation, et comme visible sur la figure 8, les trois bossages 400, 410 font saillie à la fois des faces internes 42 et externes 43 des bandes 41, de sorte que l'enveloppe 4 présente une face interne 42 discontinue avec des marches au niveau des bossages 400, 410. Les éléments rugueux peuvent par exemple être prévus uniquement sur l'intérieur des bossages 400, 410.

Bien entendu, la conformation des bossages 400, 410 du premier dispositif 1 pourrait être appliquée au second dispositif 1, et inversement.

Dans le premier mode de réalisation illustré sur les figures 1 à 4, les deux bandes 41 de l'enveloppe 4 s'étendent, à partir de la portion centrale 40 jusqu'à leurs extrémités libres respectives, selon deux axes principaux A1, A2, où les deux axes principaux A1, A2 s'intersectent selon un angle AN compris entre 85 et 95 degrés, de sorte que l'enveloppe 4 présente une forme générale en « V ».

Dans le second mode de réalisation et comme visible sur la figure 9, les deux bandes 41 de l'enveloppe 4 s'étendent, à partir de la portion centrale 40 jusqu'à leurs extrémités libres respectives, selon un même axe principal AC commun, de sorte que l'enveloppe 4 présente une forme générale rectiligne.

Par ailleurs, dans les deux modes de réalisation, et comme visible sur les figures 4 et 9, le trou 411 de chaque bossage 410 d'extrémité s'étend selon un axe de passage 412 incliné par rapport à l'axe principal A1, A2, AC correspondant d'un angle AP compris entre 30 et 60 degrés, et notamment de l'ordre de 45 degrés. Ainsi, et comme visible sur les figures 11 et 13, après enroulement spiralé des bandes 41 autour de l'élément EL à identifier, les trous 411 s'étendent sensiblement orthogonalement à l'élément EL, de sorte que les colliers de serrage 5 s'enroulent autour de l'élément EL orthogonalement à celui-ci.

Comme visible sur la figure 13, bien que le second modèle de dispositif 1 ne présente pas de trous sur le bossage 400 de la portion centrale 40, il est tout de même envisageable de prévoir un troisième collier de serrage 5 qui passe par-dessus ce bossage 400 pour l'enserrer autour de l'élément EL.

Le procédé de fabrication du dispositif 1 de radio-identification peut inclure une première séquence comprenant les étapes suivantes :
- fourniture de deux câbles comprenant chacun un brin 30 (avec un ou plusieurs fils métalliques semi-rigide) gainé par une gaine 31 ;
- réalisation du ruban 32 avec les deux câbles (brin 30 et gaine 31) à l'intérieur, avec une distance d'écartement souhaitée et respectée entre les deux gaines 31, pour ainsi former la bande primaire 8 précitée, ce ruban 32 pouvant être réalisé par moulage ;
- première opération de surmoulage avec du silicone, consistant à surmouler avec une matière silicone le ruban 32 (autrement dit la bande primaire 8 et ses brins 30), notamment selon un procédé d'extrusion, afin de former une bande dite secondaire comprenant les deux brins 30 gainés par les gaines 31, le ruban 32 et la couche de surmoulage en silicone ;
- découpage de la bande secondaire en deux tronçons de même longueur prédéfinie (ces tronçons formant les futures bandes 41 de l'enveloppe 4), la longueur des tronçons ou bandes 41 étant prédéfinie pour obtenir la meilleur adaptation entre l'impédance de l'antenne 3 et l'impédance conjugué de la puce 2 en tenant compte de l'élément EL à identifier ;
- mise à nue des brins 30 à une extrémité de chaque tronçon, par dénudage des rubans 32 et gaines 31 ;
- soudage des brins 30 à la carte électronique 20, sur laquelle est soudée la puce 2, en prenant soin d'orienter les axes principaux des tronçons (ou bandes 41) selon l'angle désirée (soit un angle sensiblement droit dans le premier mode de réalisation, soit un angle sensiblement nul dans le second mode de réalisation) ;
- seconde opération de surmoulage avec du silicone, notamment selon un procédé de moulage, consistant à surmouler avec une matière silicone :
   - la puce 2, la carte électronique 20 et les extrémités à nue des brins 30 pour former la portion centrale 40 avec son bossage 400 ; et
   - les extrémités libres des tronçons pour former les bossages 410 et pour recouvrir les extrémités des tronçons.

Dans les modes de réalisation illustrés sur les figures, chaque bande 41 enveloppe deux brins 30 d'antenne, de sorte que le dispositif 1 comprend deux antennes 3 dipolaires ou à double brins.

Avec deux antennes 3 à double brins, deux configurations sont envisageables, à savoir :
- une configuration (a) avec une première antenne 3 ayant ses deux brins 30 dans une première bande (celle de droite), et une seconde antenne 3 ayant ses deux brins 30 dans une seconde bande (celle de gauche) ; ou
- une configuration (b) avec une première antenne 3 ayant un premier brin 30 dans une première bande (celle de droite) et un second brin 30 dans une seconde bande (celle de gauche), et une seconde antenne 3 ayant un premier brin 30 dans une première bande (celle de droite) et un second brin dans une seconde bande (celle de gauche).

Dans la configuration (a), le dispositif 1 comprend donc deux antennes 3 opposées, de part et d'autre de la puce 2.

Dans la configuration (b), le dispositif 1 comprend donc deux antennes 3 qui ont chacune deux brins 30 opposés de part et d'autre de la puce 2.

Dans la configuration (b), deux modes sont possibles, à savoir :
- un premier mode où le premier brin 30 de la première antenne 3 est dans le prolongement (ou l'alignement) avec le second brin 30 de la première antenne 3, et où le premier brin 30 de la seconde antenne 3 est dans le prolongement (ou l'alignement) avec le second brin 30 de la seconde antenne 3 ; et
- un second mode où le premier brin 30 de la première antenne 3 est dans le prolongement (ou l'alignement) avec le premier brin 30 de la seconde antenne 3, et où le second brin 30 de la première antenne 3 est dans le prolongement (ou l'alignement) avec le second brin 30 de la seconde antenne 3.

La matière silicone employée lors des deux opérations de surmoulage forme une matière hydrophobe, garantie contre les champignons et moisissures, résistante au sable et à la poussière, présentant des propriétés élastiques adaptées pour son utilisation, et offrant des propriétés thermo-formables indispensable dans la seconde séquence du procédé de fabrication du dispositif 1 de radio-identification. Autrement dit, le dispositif 1 pourra être soumis à de hautes températures, de fortes pressions et sera capable de supporter différentes agressions (feu, différents liquides, brouillard salin, variations thermiques, variations de pression ...).

La seconde séquence du procédé de fabrication consiste à thermoformer l'enveloppe 4 de sorte que les deux bandes 41 soient thermo-formées selon une configuration torsadée autour d'un axe de torsion commun.

Cette opération de thermoformage est réalisée dans une étuve à une température comprise entre 80 et 100 °C, jusqu'à ce que les bandes 41 prennent une forme spiralée ou torsadée, notamment autour d'un gabarit.

Ensuite, après refroidissement, et comme visible sur la figure 12 pour le second dispositif 1, les bandes 41 auront une forme torsadée figée et le dispositif 1 de radio-identification est prêt à être placé sur l'élément EL.

En référence aux figures 11 et 13, le dispositif 1 de radio-identification est utilisé en le fixant sur l'élément EL comme suit :
- les bandes 41 torsadées sont positionnés (ou enroulées) autour de l'élément EL ;
- deux ou trois colliers de serrage 5 sont placés dans les trous 401, 411 des bossages 400, 410 respectifs, et sont ensuite serrés autour de l'élément EL afin de serrer et plaquer le dispositif 1 sur l'élément EL.

Les dispositifs 1 conformes à l'un ou à l'autre des deux modes de réalisation décrits ci-dessus, présentent d'excellentes performances en termes de distance de détection, même des environnements contraignants, ainsi qu'illustré sur la figure 14 qui sont des modélisations de la variation de la distance maximale de détection en fonction de la fréquence pour le premier dispositif 1 (courbe C1) et pour le second dispositif 1 (courbe C2).

Dans les modèles de la figure 14, la distance maximale de détection présente un maximum d'environ 3,70 mètres pour le premier dispositif 1 et d'environ 2 mètres pour le second dispositif 1. Il est également à noter que le premier dispositif 1 est plus performant que le second dispositif 1. Dans la pratique, il est à noter que la distance maximale de détection est supérieure et varie entre 2,5 mètres et 4 mètres environ.

## Revendications

1. Dispositif (1) de radio-identification pour un élément (EL) à identifier de forme tubulaire en environnement contraignant, ledit dispositif (1) de radio-identification comprenant une puce (2) de radio-identification reliée à au moins une antenne (3) à deux brins (30) conducteurs raccordés à la puce (2) de radio-identification, et une enveloppe (4) flexible enveloppant intégralement ladite puce (2) de radio-identification et lesdits brins (30), ladite enveloppe (4) présentant une portion centrale (40) surmoulant la puce (2) de radio-identification et présentant deux bandes (41), s'étendant de part et d'autre de ladite portion centrale (40), qui surmoulent chacune au moins un dit brin (30), ledit dispositif (1) de radio-identification étant **caractérisé en ce que** l'enveloppe (4) est réalisée par un surmoulage en matière silicone de ladite puce (2) de radio-identification et des brins (30), **en ce que** les deux bandes (41) de l'enveloppe (4) sont thermo-formées selon une configuration torsadée autour d'un axe de torsion commun pour permettre un maintien temporaire dudit dispositif (1) autour dudit élément (EL), **en ce que** les deux bandes (41) présentent chacune une extrémité libre pourvue d'un bossage (410) percé propre à coopérer avec un collier de serrage (5) pour permettre une fixation définitive dudit dispositif (1) autour dudit élément (EL), **et en ce que** les brins (30) sont chacun gainés par une gaine (31) en matériau diélectrique, à l'intérieur de l'enveloppe (4) qui surmoule lesdites gaines (31).

2. Dispositif (1) de radio-identification selon la revendication 1, dans lequel la portion centrale (40) présente également un bossage (400) percé propre à coopérer avec un collier de serrage.

3. Dispositif (1) de radio-identification selon les revendications 1 ou 2, dans lequel, avant thermo-formage, les deux bandes (41) de l'enveloppe (4) s'étendent, à partir de la portion centrale (40) jusqu'à leurs extrémités libres respectives, selon deux axes principaux (A1, A2), où les deux dits axes principaux (A1, A2) s'intersectent selon un angle (AN) compris entre 60 et 120 degrés, de sorte que l'enveloppe (4) présente une forme générale en « V ».

4. Dispositif (1) de radio-identification selon la revendication 3, dans lequel les deux axes principaux (A1, A2) s'intersectent selon un angle (AN) compris entre 75 et 105 degrés, et notamment entre 85 et 95 degrés.

5. Dispositif (1) de radio-identification selon les revendications 1 ou 2, dans lequel, avant thermo-formage, les deux bandes (41) de l'enveloppe (4) s'étendent, à partir de la portion centrale (40) jusqu'à leurs extrémités libres respectives, selon un même axe principal (AC) commun, de sorte que l'enveloppe (4) présente une forme générale rectiligne.

6. Dispositif (1) de radio-identification selon l'une quelconque des revendications précédentes, dans lequel, avant thermo-formage, chaque bande (41) de l'enveloppe (4) s'étend, à partir de la portion centrale (40) jusqu'à son extrémité libre, selon un axe principal (A1; A2 ; AC), et le bossage (410) correspondant présente un trou (411) s'étendant selon un axe de passage (412) incliné par rapport audit axe principal (A1 ; A2 ; AC) d'un angle compris entre 30 et 60 degrés.

7. Dispositif (1) de radio-identification selon l'une quelconque des revendications précédentes, comprenant deux antennes (3) à deux brins, chaque bande (41) de l'enveloppe (4) surmoulant deux brins (30) adjacents écartés l'un de l'autre.

8. Dispositif (1) de radio-identification selon la revendication 7, dans lequel, à l'intérieur de chaque bande (41), les deux gaines (31) surmoulant les deux brins (30) concernés sont longitudinalement reliées l'une à l'autre par un ruban (32) réalisé dans un matériau thermoplastique qui surmoule les deux gaines (31) et qui maintient un écartement constant entre les deux gaines (31).

9. Dispositif (1) de radio-identification selon les revendications 7 ou 8, comprenant :
- soit une première antenne (3) ayant ses deux brins (30) dans une première bande (41), et une seconde antenne (3) ayant ses deux brins (30) dans une seconde bande (41) ;
- soit une première antenne (3) ayant un premier brin (30) dans une première bande (41) et un second brin (30) dans une seconde bande (41), et une seconde antenne (3) ayant un premier brin (30) dans une première bande (41) et un second brin (30) dans une seconde bande (41).

10. Dispositif (1) de radio-identification selon l'une quelconque des revendications précédentes, dans lequel la puce (2) de radio-identification est soudée sur une carte électronique (20) sur laquelle sont soudés les brins (30).

11. Procédé de fabrication d'un dispositif (1) de radio-identification conforme à l'une quelconque des revendications précédentes, comprenant les étapes suivantes :
- raccordement des brins (30) à la puce (2) de radio-identification ;
- réalisation d'une enveloppe (4) en matière silicone par surmoulage de ladite puce (2) de radio-identification et des brins (30), où les brins (30) sont chacun gainés par une gaine (31) en matériau diélectrique, à l'intérieur de l'enveloppe (4) qui surmoule lesdites gaines (31), de sorte que l'enveloppe (4) présente une portion centrale (40) surmoulant la puce (2) de radio-identification et deux bandes (41), s'étendant de part et d'autre de ladite portion centrale (40), qui surmoulent chacune au moins un dit brin (30), où les deux bandes (41) présentent chacune une extrémité libre pourvue d'un bossage (410) percé propre à coopérer avec un collier de serrage (5) ; et
- thermoformage de l'enveloppe (4) de sorte que les deux bandes (41) de l'enveloppe soient thermo-formées selon une configuration torsadée autour d'un axe de torsion commun.

12. Utilisation d'un dispositif (1) de radio-identification conforme à l'une quelconque des revendications 1 à 10, pour identifier un élément (EL) à identifier de forme tubulaire, notamment du type câble électrique, conduite de circulation de fluide, gaîne tressée ou gaîne métallique, en positionnant les bandes (41) torsadées de l'enveloppe (4) autour de l'élément (EL) à identifier, et en serrant ladite enveloppe (4) au moyen d'au moins deux colliers de serrage traversant les bossages (400, 410) percés de l'enveloppe (4) et enserrant ledit élément (EL) à identifier.

## Patentansprüche

1. Vorrichtung (1) zur Funkidentifikation für ein zu identifizierendes Element (EL) mit Röhrenform in schwieriger Umgebung, wobei die Funkidentifikationsvorrichtung (1) einen Funkidentifikationschip (2) umfasst, der mit mindestens einer Antenne (3) mit zwei leitenden Strahlungselementen (30), die an den Funkidentifikationschip (2) angeschlossen sind, und eine biegsame Hülle (4) umfasst, die den Funkidentifikationschip (2) und die Strahlungselemente (30) vollständig umgibt, wobei die Hülle (4) einen zentralen Abschnitt (4) aufweist, der den Funkidentifikationschip (2) überformt und zwei Bänder (41) aufweist, die sich zu beiden Seiten des zentralen Abschnitts (40) erstrecken, die jeweils mindestens ein Strahlungselement (30) überformen, Funkidentifikationsvorrichtung (1) **dadurch gekennzeichnet, dass** die Hülle (4) durch eine Umspritzung aus Silikonmaterial des Funkidentifikationschips (2) und der Strahlungselemente (30) hergestellt ist, dass die zwei Bänder (41) der Hülle (4) gemäß einer Konfiguration warmgeformt sind, die um eine gemeinsame Torsionsachse verdrallt ist, um ein vorübergehendes Halten der Vorrichtung (1) um das Element (EL) zu erlauben, dass die zwei Bänder (41) jeweils ein freies Ende aufweisen, das mit einem Höcker (410) versehen ist, der derart durchbohrt ist, dass er geeignet ist, mit einer Spannschelle (5) zusammenzuwirken, um die endgültige Befestigung der Vorrichtung (1) um das Element (EL) zu erlauben, und dass die Strahlungselemente (30) mit einem Mantel (31) aus dielektrischem Material in dem Inneren der Hülle (4), die die Mäntel (31) überformt, ummantelt sind.

2. Funkidentifikationsvorrichtung (1) nach Anspruch 1, wobei der zentrale Abschnitt (40) auch einen Höcker (400) aufweist, der derart durchbohrt ist, dass er geeignet ist, mit einer Spannschelle zusammenzuwirken.

3. Funkidentifikationsvorrichtung (1) nach einem der Ansprüche 1 oder 2, wobei sich vor dem Warmformen die zwei Bänder (41) der Hülle (4) ausgehend von dem zentralen Abschnitt (40) bis zu ihren jeweiligen freien Enden entlang von zwei Hauptachsen (A1, A2) erstrecken, wobei die zwei Hauptachsen (A1, A2) einander mit einem Winkel (AN) zwischen 60 und 120 Grad derart schneiden, dass die Hülle (4) eine allgemeine "V"-Form aufweist.

4. Funkidentifikationsvorrichtung (1) nach Anspruch 3, wobei die zwei Hauptachsen (A1, A2) einander mit einem Winkel (AN) zwischen 75 und 105 Grad, insbesondere zwischen 85 und 95 Grad, schneiden.

5. Funkidentifikationsvorrichtung (1) nach einem der Ansprüche 1 oder 2, wobei sich die zwei Bänder (41) der Hülle (4) vor dem Warmformen ausgehend von dem zentralen Abschnitt (40) bis zu ihren jeweiligen freien Enden entlang derselben gemeinsamen Hauptachse (AC) derart erstrecken, dass die Hülle (4) eine allgemeine geradlinige Form aufweist.

6. Funkidentifikationsvorrichtung (1) nach einem der vorstehenden Ansprüche, wobei sich jedes Band (41) der Hülle (4) vor dem Warmformen ausgehend von dem zentralen Abschnitt (40) bis zu seinem freien Ende entlang einer Hauptachse (A1; A2; AC) erstreckt, und der entsprechende Höcker (410) ein Loch (411) aufweist, das sich entlang einer Durchgangsachse (412), die in Bezug auf die Hauptachse (A1; A2; AC) um einen Winkel zwischen 30 und 60 Grad geneigt ist, erstreckt.

7. Funkidentifikationsvorrichtung (1) nach einem der vorstehenden Ansprüche, die zwei Antennen (3) mit zwei Strahlungselementen umfasst, wobei jedes Band (41) der Hülle (4) zwei aneinandergrenzende Strahlungselemente (30), die voneinander beabstandet sind, überformt.

8. Funkidentifikationsvorrichtung (1) nach Anspruch 7, wobei in dem Inneren jedes Bands (41) die zwei Mäntel (31), die die zwei betreffenden Strahlungselemente (30) überformen, längs miteinander durch einen Streifen (32) verbunden sind, der aus einem Thermoplastmaterial hergestellt ist, das die zwei Mäntel (31) überformt und einen konstanten Abstand zwischen den zwei Mänteln (31) beibehält.

9. Funkidentifikationsvorrichtung (1) nach den Ansprüchen 7 oder 8, die Folgendes umfasst:
- entweder eine erste Antenne (3), die ihre zwei Strahlungselemente (30) in einem ersten Band (41) aufweist, und eine zweite Antenne (3), die ihre zwei Strahlungselemente (30) in einem zweiten Band (41) aufweist;
- oder eine erste Antenne (3), die ein erstes Strahlungselement (30) in einem ersten Band (41), aufweist, und ein zweites Strahlungselement (30) in einem zweiten Band (41), und eine zweite Antenne (3), die ein erstes Strahlungselement (30) in einem ersten Band (41) aufweist, und ein zweites Strahlungselement (30) in einem zweiten Band (41).

10. Funkidentifikationsvorrichtung (1) nach einem der vorstehenden Ansprüche, wobei der Funkidentifikationschip (2) auf eine Elektronikkarte (20) gelötet ist, auf die die Strahlungselemente (30) gelötet sind.

11. Herstellungsverfahren einer Funkidentifikationsvorrichtung (1) nach einem der vorstehenden Ansprüche, das die folgenden Schritte umfasst:
- Anschließen der Strahlungselemente (30) an den Funkidentifikationschip (2);
- Herstellen einer Hülle (4) aus Silikonmaterial durch Umspritzen des Funkidentifikationschips (2) und der Strahlungselemente (30), wobei die Strahlungselemente (30) jeweils von einem Mantel (31) aus dielektrischem Material ummantelt sind, in dem Inneren der Hülle (4), die die Mäntel (31) überformt, so dass die Hülle (4) einen zentralen Abschnitt (40) aufweist, der den Funkidentifikationschip (2) und zwei Bänder (41) überformt, die sich zu beiden Seiten des zentralen Abschnitts (40) erstrecken, die jeweils mindestens ein Strahlungselement (30) überformen, wobei die zwei Bänder (41) jeweils ein freies Ende aufweisen, das mit einem Höcker (410) derart durchbohrt ist, dass er geeignet ist, mit einer Spannschelle (5) zusammenzuwirken; und
- Warmformen der Hülle (4) derart, dass die zwei Bänder (41) der Hülle gemäß einer Konfiguration warmgeformt werden, die um eine gemeinsame Torsionsachse verdrallt ist.

12. Verwendung einer Funkidentifikationsvorrichtung (1) nach einem der Ansprüche 1 bis 10 für das Identifizieren eines zu identifizierenden Elements (EL) mit Röhrenform, insbesondere vom Typ Stromkabel, Fluidzirkulationsleitung, geflochtener Mantel oder Metallmantel, indem die verdrallten Bänder (41) der Hülle (4) um das zu identifizierende Element (EL) positioniert werden, und durch Festziehen der Hülle (4) mittels mindestens zwei Spannschellen, die durchbohrte Höcker (400, 410) der Hülle (4) durchqueren, indem das zu identifizierenden Element (EL) umschlossen wird.

## Claims

1. A radio-frequency identification device (1) for a tubular element (EL) to be identified in a constrained environment, said radio-frequency identification device (1) comprising a radio-frequency identification chip (2) connected to at least one antenna (3) having two conductive strands (30) connected to the radio-frequency identification chip (2), and a flexible envelope (4) completely enveloping said radio-frequency identification chip (2) and said strands (30), said envelope (4) having a central portion (40) overmolding the radio-frequency identification chip (2) and having two strips (41), extending on either side of said central portion (40), which each overmolds at least one said strand (30),
said radio-frequency identification device (1) being **characterized in that** the envelope (4) is made by an overmolding with a silicone material of said radio-frequency identification chip (2) and of the strands (30), **in that** the two strips (41) of the envelope (4) are thermoformed according to a twisted configuration around a common twisting axis in order to enable a temporary holding of said device (1) around said element (EL), **in that** each of the two strips (41) has a free end provided with a pierced boss (410) capable of cooperating with a hose clamp (5) in order to enable a final fastening of said device (1) around said element (EL), **and in that** each of the strands (30) is sheathed with a sheath (31) made of a dielectric material, inside the envelope (4) which overmolds said sheaths (31).

2. The radio-frequency identification device (1) according to claim 1, wherein the central portion (40) also has a pierced boss (400) capable of cooperating with a hose clamp.

3. The radio-frequency identification device (1) according to claims 1 or 2, wherein, before thermoforming, the two strips (41) of the envelope (4) extend, from the central portion (40) up to their respective free ends, according to two main axes (A1, A2), wherein said two main axes (A1, A2) intersect at an angle (AN) comprised between 60 and 120 degrees, so that the envelope (4) has a general « V » shape.

4. The radio-frequency identification device (1) according to claim 3, wherein the two main axes (A1, A2) intersect at an angle (AN) comprised between 75 and 105 degrees, and in particular between 85 and 95 degrees.

5. The radio-frequency identification device (1) according to claims 1 or 2, wherein, before thermoforming, the two strips (41) of the envelope (4) extend, from the central portion (40) up to their respective free ends, according to the same common main axis (AC), so that the envelope (4) has a rectilinear general shape.

6. The radio-frequency identification device (1) according to any one of the preceding claims, wherein, before thermoforming, each strip (41) of the envelope (4) extends, from the central portion (40) up to its free end, according to a main axis (A1; A2; AC), and the corresponding boss (410) has a hole (411) extending according to a passage axis (412) inclined with respect to said main axis (A1; A2; AC) at an angle comprised between 30 and 60 degrees.

7. The radio-frequency identification device (1) according to any one of the preceding claims, comprising two double-stranded antennas (3), each strip (41) of the envelope (4) overmolding two adjacent strands (30) spaced apart from each other.

8. The radio-frequency identification device (1) according to claim 7, wherein, inside each strip (41), the two sheaths (31) overmolding the concerned two strands (30) are longitudinally linked to each other by a ribbon (32) made of a thermoplastic material which overmolds the two sheaths (31) and which maintains a constant spacing between the two sheaths (31).

9. The radio-frequency identification device (1) according to claims 7 or 8, comprising:
- either a first antenna (3) having its two strands (30) in a first strip (41), and a second antenna (3) having its two strands (30) in a second strip (41);
- or a first antenna (3) having a first strand (30) in a first strip (41) and a second strand (30) in a second strip (41), and a second antenna (3) having a first strand (30) in a first strip (41) and a second strand (30) in a second strip (41).

10. The radio-frequency identification device (1) according to any one of the preceding claims, wherein the radio-frequency identification chip (2) is soldered on an electronic board (20) on which the strands (30) are soldered.

11. A method for manufacturing a radio-frequency identification device (1) in accordance with any one of the preceding claims, comprising the following steps of:
- connecting the strands (30) to the radio-frequency identification chip (2);
- making an envelope (4) in a silicone material by overmolding of said radio-frequency identification chip (2) and the strands (30), wherein each of the strands (30) is sheathed with a sheath (31) made of a dielectric material, inside the envelope (4) which overmolds said sheaths (31), so that the envelope (4) has a central portion (40) overmolding the radio-frequency identification chip (2) and two strips (41), extending on either side of said central portion (40), which each overmolds at least one said strand (30), wherein each of the two strips (41) has a free end provided with a pierced boss (410) capable of cooperating with a hose clamp (5); and
- thermoforming the envelope (4) so that the two strips (41) of the envelope are thermoformed according to a twisted configuration around a common twisting axis.

12. A use of a radio-frequency identification device (1) in accordance with any one of claims 1 to 10, to identify a tubular element (EL) to be identified, such as in particular an electrical cable, a fluid circulation conduit, a braided sheath or a metallic sheath, by positioning the twisted strips (41) of the envelope (4) around the element (EL) to be identified, and by tightening said envelope (4) by means of at least two hose clamps passing through the pierced bosses (400, 410) of the envelope (4) and clasping said element (EL) to be identified.
